# EUROPEAN PATENT SPECIFICATION

(11) **EP 4 403 786 B1**
(45) Date of publication and mention of the grant of the patent: **25.02.2026**
(21) Application number: 24152146.7
(22) Date of filing: 16.01.2024
(51) Int. Cl.: F16C 17/02, F16C 32/04, F16C 32/06, F04D 29/057, H02K 7/09

(54) **GAS BEARING FOR CENTRIFUGAL COMPRESSOR, CENTRIFUGAL COMPRESSOR AND REFRIGERATION SYSTEM**
GASLAGER FÜR ZENTRIFUGALVERDICHTER, ZENTRIFUGALVERDICHTER UND KÜHLSYSTEM
PALIER À GAZ POUR COMPRESSEUR CENTRIFUGE, COMPRESSEUR CENTRIFUGE ET SYSTÈME DE RÉFRIGÉRATION

(30) Priority: 18.01.2023 CN 202310074764
(43) Date of publication of application: 24.07.2024
(73) Proprietor: Carrier Corporation, Palm Beach Gardens, FL 33418 (US)
(72) Inventor: ZHANG, Wei, Shanghai, 201206 (CN); LI, Jiedong, Shanghai, 201206 (CN); CAO, Jun, Shanghai, 201206 (CN); JIN, Caiyan, Shanghai, 201206 (CN)
(74) Representative: Dehns

(56) References cited:
- CN-A- 104 852 509
- CN-B- 105 099 108
- US-A1- 2019 120 292
- US-A1- 2021 062 715
- US-A1- 2021 404 720
- US-B1- 6 965 181

## Description

### FIELD OF THE INVENTION

The present invention relates to the field of refrigeration technology, in particular to a gas bearing for a centrifugal compressor, and further to a centrifugal compressor configured with the gas bearing, as well as a refrigeration system equipped with the centrifugal compressor.

### BACKGROUND OF THE INVENTION

At present, oil-free lubrication technology is gradually adopted to replace the original oil lubrication for centrifugal compressors, thereby saving the trouble of managing lubricating oil systems, such as oil circuit maintenance, oil return management, and oil circuit system maintenance. On the other hand, oil-free lubrication also represents higher compressor operating efficiency and higher refrigeration system operating efficiency, lower vibration and noise, stable operation, significantly reduced costs, cleaner energy, and better user experience.

Gas bearing is a low-cost and highly promising way and means to solve the problem of oil-free lubrication for centrifugal compressors. Gas bearing uses gas as the lubricating medium. After the rotating speed reaches a certain value (i.e., the lift-off speed), a stable gas film is formed between the foil and the rotor, thereby achieving the effect of the bearing. Therefore, it has the advantages such as high speed, low friction, oil-free lubrication, and a wide range of applicable temperatures, thus having broad application prospects in high-speed rotating machinery, such as centrifugal compressors used in the refrigeration field. The centrifugal compressor supported by gas bearing consists of housing, volute, impeller, radial and thrust gas bearing, high-speed motor, and other components. During the operating process, the high-speed motor is supported by gas bearings at the left and right ends, resulting in low rotational resistance and high rotational speed. However, during the start-up/shut-down stage of the centrifugal compressor (i.e., below the lift-off speed), the dry friction between the foil of the gas bearing and the motor shaft affects the stability of the bearing, thus requiring a high level of friction-resistant coating on the foil. It is also an important factor that affects the stable operation of the foil bearing and limits its widespread application.

Therefore, there is an urgent need to seek a new type of gas bearing for centrifugal compressor.

US 6 965 181 B1 discloses a hybrid foil-magnetic bearing wherein the foil and magnetic bearing parts share the load at predetermined speeds or operating conditions.

### SUMMARY OF THE INVENTION

Viewed from a first aspect, there is provided a gas bearing for a centrifugal compressor is provided, which effectively solves the above problems and problems in other aspects existing in the prior art. The centrifugal compressor comprises a housing and a motor shaft located within the housing, the gas bearing comprising:
a bearing housing, sleeved on an outer side of the motor shaft and fixed on the housing of the centrifugal compressor;
an electromagnetic stator, fixed in or near the middle of the top of the bearing housing, and wound with a coil that can be powered;
an electromagnetic rotor, fixed on an outer surface of the motor shaft and arranged circumferentially around the motor shaft; and
a foil, located between the bearing housing and the motor shaft, and attached with a frication-resistant coating.

The top of the bearing housing is provided with a groove for accommodating the electromagnetic stator.

The groove may pass through the front and rear end faces of the bearing housing in the axial direction of the motor shaft; or the groove is located in the middle of the top of the bearing housing.

The electromagnetic stator may be located at an end side of the top of the bearing housing.

The motor shaft may be provided with a sleeve, and the electromagnetic rotor is fixed on the sleeve in a nested manner.

The bearing housing and/or the sleeve may be made of steel.

The electromagnetic stator and/or the electromagnetic rotor may be made of silicon steel sheets.

The length of the electromagnetic stator and that of the electromagnetic rotor may be the same in the axial direction of the motor shaft.

Viewed from a second aspect, there is provided a centrifugal compressor configured with gas bearing as described in the first aspect above. In other words, as a second aspect, there is provided a centrifugal compressor comprising the gas bearing of the first aspect.

Viewed from a third aspect, there is provided a refrigeration system equipped with the centrifugal compressor as described in the second aspect. In other words, as a third aspect, there is provided a refrigeration system comprising the centrifugal compressor as described in the second aspect.

It can be appreciated that the gas bearing for a centrifugal compressor according to the present invention adopts an electromagnetic structure design, which, by providing a vertically upward electromagnetic force to counteract part or all of the gravity of the motor shaft itself, provides a certain amount of electromagnetic force to the motor shaft during the start-up/shut-down stage of the centrifugal compressor, so as to reduce or avoid the dry friction between the motor shaft and the foil, lower the load of the gas bearing, reduce the wear during the start-up/shut-down process of the bearing, and prolong the service life of the gas bearing, thus providing system stability and expanding the application range of centrifugal compressors with gas bearing or foil bearing.

### BRIEF DESCRIPTION OF THE DRAWINGS

Certain exemplary embodiments will now be described in greater detail by way of example only and with reference to the accompanying drawings in which:
FIG. 1 shows a schematic diagram of the cross section of a first embodiment of a gas bearing for a centrifugal compressor;
FIG. 2 shows a schematic diagram of the longitudinal section of the gas bearing for a centrifugal compressor in FIG. 1;
FIG. 3 shows a schematic diagram of the cross section of a second embodiment of a gas bearing for a centrifugal compressor;
FIG. 4 shows a schematic diagram of the longitudinal section of the gas bearing for a centrifugal compressor in FIG. 3;
FIG. 5 shows a schematic diagram of the cross section of a third embodiment of a gas bearing for a centrifugal compressor; and
FIG. 6 shows a schematic diagram of the longitudinal section of the gas bearing for a centrifugal compressor in FIG. 5.

### DETAILED DESCRIPTION OF EMBODIMENT(S) OF THE INVENTION

The content of the present invention and the differences between the present invention and the prior art can be understood by referring to the accompanying drawings and the text. The technical solution of the present invention will be described in further detail below through the accompanying drawings and by enumerating some optional embodiments of the present invention.

It should be noted that any technical features or solutions in the embodiments are one or several of multiple optional technical features or technical solutions. For brevity, it is neither possible to exhaustively enumerate herein all alternative technical features and technical solutions of the present invention, nor is it possible to emphasize that the implementation mode of each technical feature is one of the optional multiple implementation modes. Therefore, those skilled in the art should be aware that any technical means provided by the present invention can be substituted, or any two or more technical means or technical features provided by the present invention can be combined with each other to obtain a new technical solution.

Any technical feature or technical solution within the embodiments does not limit the scope of protection of the present invention. The scope of protection of the present invention should include any alternative technical solutions that those skilled in the art can think of without creative labor, as well as any new technical solutions obtained by those skilled in the art by combining any two or more technical means or technical features provided by the present invention.

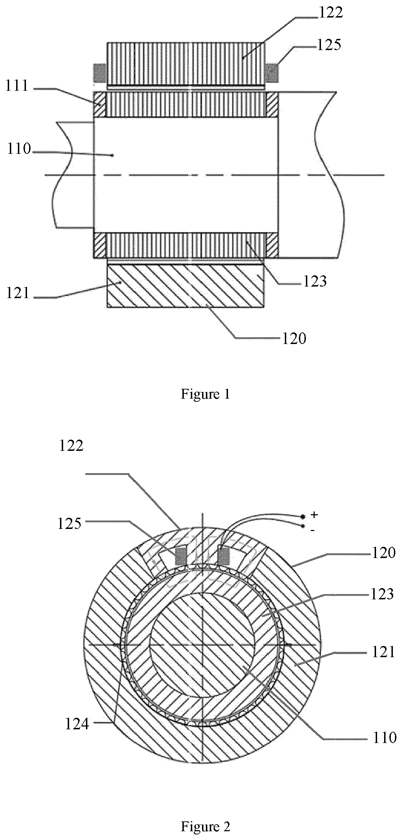

FIG. 1 schematically illustrates the structure of a first embodiment of a gas bearing for a centrifugal compressor according to the present invention in general. The centrifugal compressor comprises a housing (not shown) and a motor shaft 110 located within the housing. The motor shaft 110 is supported by a gas bearing during rotation, where the end of the motor shaft 110 extends from the motor cavity and is mounted with an impeller (not shown). It should be noted that the motor cavity can be a part of the housing or a fixed component independent of the housing. As can be clearly seen from FIGS. 1 and 2, the gas bearing 120 is composed of a bearing housing 121, an electromagnetic stator 122, an electromagnetic rotor 123, a foil 124, and other components. The bearing housing 121 is sleeved on the outer side of the motor shaft 110 and fixed on the housing of the centrifugal compressor. The electromagnetic stator 122 is fixed in the middle of the top of the bearing housing 121 or near the top of the bearing housing 121, and is wound with a coil 125 that can be powered. The electromagnetic stator 122 can be composed of iron core laminations and coil wound on the laminations. The electromagnetic rotor 123 is fixed on the outer surface of the motor shaft 110 and arranged circumferentially around the motor shaft 110. The electromagnetic rotor 123 can be composed of laminations. When the centrifugal compressor starts to operate, the electromagnetic stator 122 and the electromagnetic rotor 123 form a vertically upward electromagnetic force when the coil 125 is powered. Under the action of the electromagnetic force, the motor shaft 110 can overcome part or all of its own gravity and levitate relative to the foil 124, thereby reducing or avoiding the dry friction between the motor shaft 110 and the foil 124 during the start-up/shutdown stage of the centrifugal compressor, and further improving the system stability of the centrifugal compressor and expanding the application range of centrifugal compressors with gas bearing. "Levitate" here refers to the state in which the motor shaft maintains a relatively constant interval relative to the gas bearing.

With continued reference to FIG. 2, the foil 124 is located between the bearing housing 121 and the motor shaft 110, and is fixed on the bearing housing 121. Specifically, the foil 124 is composed of one or more layers of corrugated bump foil and top foil, with a good flexible surface and a friction-resistant coating attached to the top foil on the side near the rotor. When the centrifugal compressor is operating normally, the foil 124, by means of the relative motion between the motor shaft 110 and the surface of the gas bearing, allows the motor shaft 110 to introduce gas with a certain viscosity into the limited space between the motor shaft and the top foil for compression, forming a lubricating gas film with a certain pressure, thereby keeping the motor shaft levitated. It should be noted that the coil can be powered during the start-up/shut-down stage of the centrifugal compressor or when the motor shaft of the centrifugal compressor rotates at a speed lower than the lift-off speed. At this point, the vertically upward electromagnetic force formed by the electromagnetic stator and the electromagnetic rotor counteracts or at least partially counteracts the gravity of the motor shaft, thus allowing the motor shaft to overcome its own gravity to be levitated. Once the motor shaft of the centrifugal compressor rotates at a speed higher than the lift-off speed, the stable gas film formed by the gas bearing enables the motor shaft to be kept levitated without the need to continue powering the coil. Therefore, merely as an example, it is only necessary to consider providing a supporting force to the motor shaft through electromagnetic force during the start-up/shut-down stage of the centrifugal compressor. This can reduce or avoid the dry friction between the gas bearing and the motor shaft, thereby lowering the requirements for the coating of the gas bearing and improving the stability of the gas bearing operation. It should be noted that when the gas bearing is capable of forming a stable gas film and providing stable support for the motor shaft, the electromagnetic stator can still be continuously energized to provide electromagnetic force, so as to expand the overall load capacity of the gas bearing and improve the application range of centrifugal compressors with gas bearing.

In combination with other optional embodiments in the above embodiments, the motor shaft 110 is provided with a sleeve 111, which can be tightly fitted to the motor shaft 110, and the electromagnetic rotor 123 is fixed in the sleeve 111, playing a role in compressing and fixing the laminations. In order to maximize the electromagnetic force between the electromagnetic stator 122 and the electromagnetic rotor 123, the length of the electromagnetic stator 122 and that of the electromagnetic rotor 123 are the same in the axial direction of the motor shaft 110, as shown in FIG. 1.

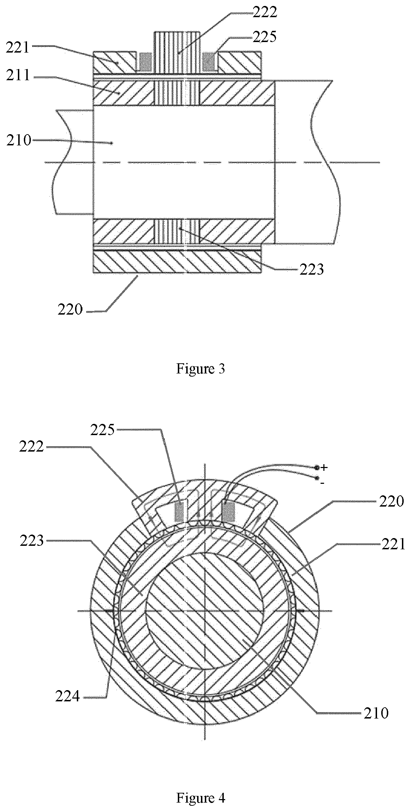

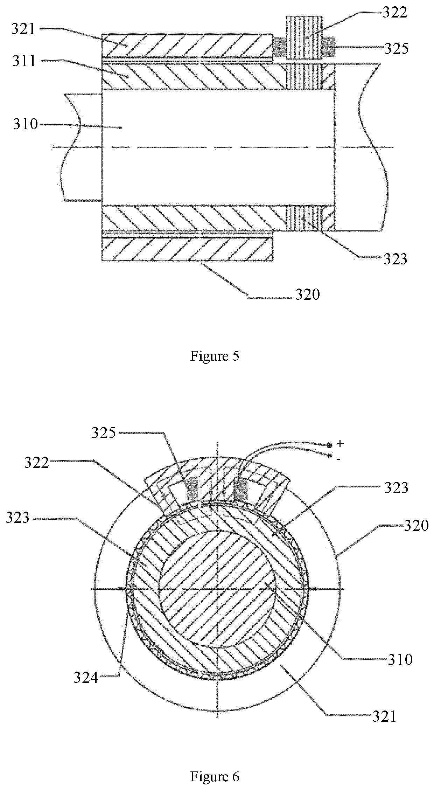

In the embodiment shown in FIGS. 1 and 2, the top of the bearing housing 121 is provided with a groove for accommodating the electromagnetic stator 122. Further, in the case where the motor shaft 110 or the rotor has a relatively large volume and heavy weight, in order to generate a larger electromagnetic force, the groove can pass through the front and rear end faces of the bearing housing 121 in the axial direction of the motor shaft 110. Of course, the shape and size of the groove are not limited to this. For example, in a second embodiment of the gas bearing according to the present invention as shown in FIGS. 3 and 4, a motor shaft 210, a bearing housing 221, a bearing sleeve 211, an electromagnetic stator 222, a coil 225, an electromagnetic rotor 223, and a foil 224 etc. in the gas bearing 220 can refer to the previous embodiment, which will not be repeated here. In this embodiment, the motor shaft 210 or the rotor has a relatively small volume and light weight, so the groove can be arranged in the middle of the top of the bearing housing 221 to accommodate the electromagnetic stator 222. For another example, in a third embodiment of the gas bearing according to the present invention as shown in FIGS. 5 and 6, a motor shaft 310, a bearing housing 321, a bearing sleeve 311, an electromagnetic stator 322, a coil 325, an electromagnetic rotor 323, and a foil 324 etc. in the gas bearing 320 can refer to the previous embodiments, which will not be repeated here. In this embodiment, when the internal space of the housing is large enough, the electromagnetic stator 322 is located at an end side of the top of the bearing housing 321.

As an example, the bearing housing 121 and/or the sleeve 111 are made of steel. In addition, the electromagnetic stator 122 and/or the electromagnetic rotor 123 are made of laminated silicon steel sheets, so as to effectively suppress eddy currents generated on the surface of the motor shaft 110. The size, shape, and position of the silicon steel sheets can be adjusted according to actual production or design needs, which are not limited here.

Further, it should be noted that the present invention does not provide detailed description for the design of the foil. Therefore, the gas bearing of the present invention can be applied to a wide range of foil forms, and to different arrangements in the circumferential and axial directions.

In addition, the present invention also provides a centrifugal compressor configured with the gas bearing according to the various embodiments. The centrifugal compressor can include a first stage or a second stage of two-stage compression with a back-to-back design: a low-pressure stage compression composed of a first impeller assembly, and a high-pressure stage compression composed of a second impeller assembly, wherein the second impeller assembly (i.e., the impeller of the second stage) is generally smaller than the first impeller assembly (i.e., the impeller of the first stage), where the inlet of the impeller of the second stage is the outlet of the impeller of the first stage. It can be appreciated that the centrifugal compressor can also include a first stage or a second stage where two stages are arranged in parallel with a back-to-back design, wherein the impeller sizes of the two stages are the same, that is, the inlet and outlet arrangements are the same. The first impeller assembly is located at a first end of the motor shaft, and the second impeller assembly is located at a second end of the motor shaft. In the centrifugal compressor, there can be two sets of radial gas bearings, i.e., a first set of gas bearings and a second set of gas bearings, wherein the first set of gas bearings can be arranged between the motor cavity and the first impeller assembly, and the second set of gas bearings can be arranged between the motor cavity and the second impeller assembly. There can be two sets of axial gas bearings, which are located on the left and right sides of the thrust disk. Wherein, the thrust disk is fixed to the motor shaft and rotates therewith accordingly. The thrust disk can be located on the first impeller assembly side or the second impeller assembly side. As for its specific arrangement on a certain side, it can be located between the impeller and the radial gas bearing, or between the radial gas bearing and the motor rotor. Of course, the gas bearing is not limited to being applied to the two-stage compressor with a back-to-back design. For example, a compressor with one to multiple impellers arranged in series can also use the aforementioned gas bearing.

Furthermore, the present invention further provides a refrigeration system equipped with the aforementioned centrifugal compressor. The refrigeration system may include a cooling tower, a water chilling unit, and a pumping device etc. connected through pipelines, wherein the water chilling unit is composed of a centrifugal compressor, a condenser, a throttling device, an evaporator, and other components. As mentioned earlier, centrifugal compressors equipped with the aforementioned gas bearing can effectively improve system stability. Therefore, it is highly recommended to apply the aforementioned centrifugal compressors to various refrigeration systems.

To sum up, the gas bearing for a centrifugal compressor according to the present invention adopts an electromagnetic structure design, which, by providing a vertically upward electromagnetic force to counteract part or all of the gravity of the motor shaft itself, allows the motor shaft to levitate during the start-up/shut-off stage of the centrifugal compressor, thus reducing or avoiding the dry friction between the motor shaft and the bearing housing, so as to improve system stability and expand the application range of centrifugal compressors with the gas bearing.

If terms such as "first" and "second" are used herein to limit components, those skilled in the art should be aware that the use of "first" and "second" is only for the convenience of describing and distinguishing components. Unless otherwise stated, the above terms do not have any special meanings.

Meanwhile, if the above invention discloses or relates to components or structural components that are fixedly connected to each other, unless otherwise stated, fixed connections can be understood as fixed connections in a detachable manner (such as connections using bolts or screws), or as fixed connections in a non-detachable manner (such as through riveting, welding). Of course, fixed connections to each other can also be replaced by integrated structures (such as those manufactured into one piece using casting technology), except that when it is evidently impossible to use the integration process.

In addition, as to the terms used to indicate positional relationships or shapes in any of the technical solutions disclosed in the present invention, unless otherwise stated, the implications thereof include states or shapes that are approximate, similar, or close to them. Any component provided by the present invention can be either assembled from multiple individual components or manufactured as a separate component using an integration process.

If terms such as "center", "longitudinal", "transverse", "front", "back", "left", "right", "vertical", "horizontal", "top", "bottom", "inside", "outside", etc. are used in the depiction of the present invention, the orientations or positional relationships indicated by the above terms are based on the orientations or positional relationships shown in the drawings. These terms are used merely for the convenience of describing the present invention and simplifying the description, rather than indicating or implying that the device, mechanism, component or element referred to must have a specific orientation, be constructed and operated in a specific orientation, so they cannot be understood as forming limitations on the scope of protection of the present invention.

Last, it should be noted that the above embodiments are only used to illustrate the technical solution of the present invention but not to limit it. Although the present invention has been described in detail with reference to preferred embodiments, those skilled in the art, however, should understand that the specific embodiments of the present invention can still be modified. The invention is defined by appended claims.

## Claims

1. A gas bearing (120) for a centrifugal compressor, comprising a housing and a motor shaft (110) located within the housing, wherein the gas bearing (120) comprises:
a bearing housing (121), sleeved on an outer side of the motor shaft (110) and fixed on the housing of the centrifugal compressor;
an electromagnetic stator (122), fixed in or near the middle of the top of the bearing housing (121), and wound with a coil (125) that can be powered;
an electromagnetic rotor (123), fixed on an outer surface of the motor shaft (110) and arranged circumferentially around the motor shaft (110); and
a foil (124), located between the bearing housing (121) and the motor shaft (110), and attached with a friction-resistant coating,
**characterised in that** the top of the bearing housing (121) is provided with a groove for accommodating the electromagnetic stator (123).

2. The gas bearing according to claim 1, wherein the groove passes through front and rear end faces of the bearing housing (121) in an axial direction of the motor shaft (110); or the groove is located in the middle of the top of the bearing housing (121).

3. The gas bearing according to claim 1 or 2, wherein the electromagnetic stator (123) is located at an end side of the top of the bearing housing (121).

4. The gas bearing according to any preceding claim, wherein the motor shaft is provided with a sleeve (111), and the electromagnetic rotor (123) is fixed on the sleeve in a nested manner.

5. The gas bearing according to claim 4, wherein the sleeve (111) is made of steel.

6. The gas bearing according to any preceding claim, wherein the bearing housing (121) is made of steel.

7. The gas bearing according to any preceding claim, wherein the electromagnetic stator is made of silicon steel sheets.

8. The gas bearing according to any preceding claim, wherein the electromagnetic rotor is made of silicon steel sheets.

9. The gas bearing according to any preceding claim, wherein a length of the electromagnetic stator and that of the electromagnetic rotor are the same in the axial direction of the motor shaft.

10. A centrifugal compressor, wherein the centrifugal compressor is configured with the gas bearing according to any preceding claim.

11. A refrigeration system, wherein the refrigeration system is equipped with the centrifugal compressor according to claim 10.

## Patentansprüche

1. Gaslager (120) für einen Zentrifugalverdichter, umfassend ein Gehäuse und eine Motorwelle (110), die sich innerhalb des Gehäuses befindet, wobei das Gaslager (120) Folgendes umfasst:
ein Lagergehäuse (121), das auf eine Außenseite der Motorwelle (110) aufgezogen ist und an dem Gehäuse des Zentrifugalverdichters befestigt ist;
einen elektromagnetischen Stator (122), der in oder in der Nähe der Mitte der Oberseite des Lagergehäuses (121) befestigt ist und mit einer Spule (125) gewickelt ist, die mit Strom versorgt werden kann;
einen elektromagnetischen Rotor (123), der an einer Außenfläche der Motorwelle (110) befestigt ist und in Umfangsrichtung um die Motorwelle (110) herum angeordnet ist; und
eine Folie (124), die sich zwischen dem Lagergehäuse (121) und der Motorwelle (110) befindet und mit einer reibungsbeständigen Beschichtung angebracht ist,
**dadurch gekennzeichnet, dass** die Oberseite des Lagergehäuses (121) mit einer Nut zur Aufnahme des elektromagnetischen Stators (123) versehen ist.

2. Gaslager nach Anspruch 1, wobei die Nut durch eine vordere Endfläche und eine hintere Endfläche des Lagergehäuses (121) hindurch in einer axialen Richtung der Motorwelle (110) verläuft; oder sich die Nut in der Mitte der Oberseite des Lagergehäuses (121) befindet.

3. Gaslager nach Anspruch 1 oder 2, wobei sich der elektromagnetische Stator (123) an einer Endseite der Oberseite des Lagergehäuses (121) befindet.

4. Gaslager nach einem der vorhergehenden Ansprüche, wobei die Motorwelle mit einer Hülse (111) versehen ist und der elektromagnetische Rotor (123) auf der Hülse verschachtelt befestigt ist.

5. Gaslager nach Anspruch 4, wobei die Hülse (111) aus Stahl hergestellt ist.

6. Gaslager nach einem der vorhergehenden Ansprüche, wobei das Lagergehäuse (121) aus Stahl hergestellt ist.

7. Gaslager nach einem der vorhergehenden Ansprüche, wobei der elektromagnetische Stator aus Siliziumstahlblechen hergestellt ist.

8. Gaslager nach einem der vorhergehenden Ansprüche, wobei der elektromagnetische Rotor aus Siliziumstahlblechen hergestellt ist.

9. Gaslager nach einem der vorhergehenden Ansprüche, wobei eine Länge des elektromagnetischen Stators und jene des elektromagnetischen Rotors dieselben in der axialen Richtung der Motorwelle sind.

10. Zentrifugalverdichter, wobei der Zentrifugalverdichter mit dem Gaslager nach einem der vorhergehenden Ansprüche konfiguriert ist.

11. Kühlsystem, wobei das Kühlsystem mit dem Zentrifugalverdichter nach Anspruch 10 ausgestattet ist.

## Revendications

1. Palier à gaz (120) pour compresseur centrifuge, comprenant un carter et un arbre de moteur (110) situé à l'intérieur du carter, dans lequel le palier à gaz (120) comprend :
un boîtier de palier (121), manchonné sur un côté externe de l'arbre de moteur (110) et fixé sur le carter du compresseur centrifuge ;
un stator électromagnétique (122), fixé au milieu ou à proximité du milieu de la partie supérieure du boîtier de palier (121), et enroulé avec une bobine (125) qui peut être alimentée ;
un rotor électromagnétique (123), fixé sur une surface externe de l'arbre de moteur (110) et disposé circonférentiellement autour de l'arbre de moteur (110) ; et
une feuille (124), située entre le boîtier de palier (121) et l'arbre de moteur (110), et attachée avec un revêtement résistant au frottement,
**caractérisé en ce que** la partie supérieure du boîtier de palier (121) est pourvue d'une rainure destinée à loger le stator électromagnétique (123).

2. Palier à gaz selon la revendication 1, dans lequel la rainure passe à travers des faces d'extrémité avant et arrière du boîtier de palier (121) dans une direction axiale de l'arbre de moteur (110) ; ou la rainure est située au milieu de la partie supérieure du boîtier de palier (121).

3. Palier à gaz selon la revendication 1 ou 2, dans lequel le stator électromagnétique (123) est situé au niveau d'un côté d'extrémité de la partie supérieure du boîtier de palier (121).

4. Palier à gaz selon l'une quelconque revendication précédente, dans lequel l'arbre de moteur est pourvu d'un manchon (111), et le rotor électromagnétique (123) est fixé sur le manchon de manière emboîtée.

5. Palier à gaz selon la revendication 4, dans lequel le manchon (111) est fait d'acier.

6. Palier à gaz selon l'une quelconque revendication précédente, dans lequel le boîtier de palier (121) est fait d'acier.

7. Palier à gaz selon l'une quelconque revendication précédente, dans lequel le stator électromagnétique est fait de tôles d'acier au silicium.

8. Palier à gaz selon l'une quelconque revendication précédente, dans lequel le rotor électromagnétique est fait de tôles d'acier au silicium.

9. Palier à gaz selon l'une quelconque revendication précédente, dans lequel une longueur du stator électromagnétique et celle du rotor électromagnétique sont identiques dans la direction axiale de l'arbre de moteur.

10. Compresseur centrifuge, dans lequel le compresseur centrifuge est configuré avec le palier à gaz selon l'une quelconque revendication précédente.

11. Système de réfrigération, dans lequel le système de réfrigération est pourvu du compresseur centrifuge selon la revendication 10.
